# EUROPEAN PATENT SPECIFICATION

(11) **EP 1 703 098 B1**
(45) Date of publication and mention of the grant of the patent: **03.10.2007**
(21) Application number: 06005662.9
(22) Date of filing: 20.03.2006
(51) Int. Cl.: F01N 3/28, F01N 1/08

(54) **Exhaust gas purification device**
Abgasreinigungsvorrichtung
Dispositif de purification des gaz d'échappement

(30) Priority: 14.04.2005 JP 2005117169; 18.03.2005 JP 2005080688
(43) Date of publication of application: 20.09.2006
(73) Proprietor: YAMAHA HATSUDOKI KABUSHIKI KAISHA, Iwata-shi, Shizuoka-ken 438-8501 (JP)
(72) Inventor: Nishimura, Hidehiro, Yamaha Hatsudoki K.K., Iwata-shi Shizuoka-ken 438-8501 (JP); Takii, Osamu, Yamaha Hatsudoki K.K., Iwata-shi Shizuoka-ken 438-8501 (JP); Endou, Michihiko, Yamaha Hatsudoki K.K., Iwata-shi Shizuoka-ken 438-8501 (JP)
(74) Representative: Grünecker, Kinkeldey, Stockmair & Schwanhäusser Anwaltssozietät

(56) References cited:
- EP-A- 1 314 865
- EP-A- 1 353 047
- FR-A- 2 827 908
- US-A1- 2004 202 591

## Description

The present invention relates to an exhaust gas purification device purifying an exhaust gas discharged by a drive of an internal combustion engine by causing it to pass through an inside of a catalyst.

Hitherto, there is known an engine discharging the exhaust gas after purifying it by disposing an upstream side catalyst, which performs mainly a reduction action, in an exhaust upstream side in an exhaust pipe connected to an exhaust port of the internal combustion engine and disposing a downstream side catalyst, which performs mainly an oxidation action, in a downstream side of the former catalyst, and by connecting a secondary air supply pipe between the upstream side catalyst and the downstream side catalyst. In the engine having the exhaust gas purification function like this, in order to cause both of the upstream side catalyst and the downstream side catalyst to normally function, it is necessary to provide a predetermined spacing between the upstream side catalyst and the downstream side catalyst.

On the other hand, it becomes an advantage in improving the exhaust gas purification function of the engine to adapt such that, by so making that both of the upstream side catalyst and the downstream side catalyst, which have been disposed in the exhaust pipe, are located within a muffler, the catalyst more rapidly reaches to its activation temperature by a heat of the exhaust gas within the muffler.

Incidentally, in Japanese Utility Model Registration No. 2504008 Gazette, there is disclosed an engine having possessed the exhaust gas purification function, in which the secondary air supply pipe is connected to the exhaust pipe between the upstream side catalyst and the downstream side catalyst, and a portion involving the downstream side catalyst in the exhaust pipe is accommodated within the muffler.

However, if it is attempted to dispose the exhaust pipe such that both of the upstream side catalyst and the downstream side catalyst are located within the muffler, the muffler becomes unnecessarily large. That is, even in the case where there is adapted such that both of the upstream side catalyst and the downstream side catalyst are located within the muffler, it is necessary to provide the above-mentioned spacing between the upstream side catalyst and the downstream side catalyst and, corresponding thereto, it is necessary to enlarge the muffler itself as well. However, especially in a saddle-riding type vehicle such as motorcycle, it is difficult in a layout of the vehicle to equip the engine having the unnecessarily large muffler. The present invention is one having been made in view of the above problems.

EP 1314865 A2 discloses an exhaust purifying apparatus having an exhaust pipe expending from an engine of a motorcycle. A first honeycomb catalyst portion is arranged in the exhaust pipe in a small diameter portion thereof. A second honeycomb catalyst portion is arranged on the downstream side of the first honeycomb catalyst portion in a large diameter portion of the exhaust pipe. The entire exhaust pipe is made from a single pipe which is widened in the area of the honeycomb catalysts.

It is an objective of the present invention to provide an exhaust gas purification device for an internal combustion engine in which both of the upstream side catalyst and the downstream side catalyst, which are provided in the exhaust pipe connected to the exhaust port of the internal combustion engine, are disposed within the muffler, and in which a size of that muffler can be made small.

According to the present invention, said objective is solved in an inventive manner by the combination of features of independent claim 1.

Preferably, according to claim 2, it is further beneficial if the first hollow barrel part has in its end face an opening for introducing the exhaust pipe and the second hollow barrel part is joined to the opening and has an outer diameter smaller than the first hollow barrel part.

Further, one part of the upstream side catalyst at least at an upstream side may be disposed in the second hollow barrel part of the muffler, and the exhaust pipe may be disposed in the muffler at a downstream side of the upstream side catalyst.

Likewise, a secondary air supply pipe may be connected between the upstream side catalyst and the downstream side catalyst in the exhaust pipe.

According to a preferred embodiment of the exhaust gas purification device, in the exhaust pipe, a portion accommodated in the muffler is curved after having been extended in a longitudinal direction of the muffler.

Also, the muffler may possess an inflow suppression member suppressing an inflow of an exhaust gas into the second tubular section.

Therein, the inflow suppression member may be provided between an end part, in the exhaust pipe, accommodated in the muffler and discharging the exhaust gas and a portion, in the secondary air supply pipe, accommodated in the muffler.

Moreover, an edge part of the inflow suppression member may be joined to an inner circumference face of the first tubular section.

According to a further preferred embodiment, the engine is a unit swing type engine having been supported swingably with respect to a car body and includes the exhaust gas purification device as specified above.

Therein, the internal combustion engine may be disposed such that an axis of a cylinder of the internal combustion engine becomes approximately horizontal.

According to yet another preferred embodiment, there is provided a saddle-riding type vehicle having an engine as discussed above.

In the following, the present invention is explained in greater detail with respect to several embodiments thereof in conjunction with the accompanying drawings, wherein:
- Fig. 1: is a side view of a motorcycle to which an engine by a 1 st embodiment has been mounted,
- Fig. 2: is a sectional view of an exhaust gas purification device of the engine,
- Fig. 3: is a perspective view of the exhaust gas purification device in a vehicle traveling direction front,
- Fig. 4: is a IV - IV line sectional view of Fig. 2,
- Fig. 5: is a sectional view of an exhaust gas purification device by another embodiment, and
- Fig. 6: is a perspective view of the exhaust gas purification device by another embodiment.

### Within the Figures, reference numeral

- 1 :: is a motorcycle,
- 2:: is a car body frame,
- 3:: is a front fork,
- 4:: is an engine unit,
- 5:: is a seat,
- 6:: is a front wheel,
- 7:: is a handle,
- 8:: is a rear wheel,
- 10:: is an engine,
- 11:: is an internal combustion engine,
- 15:: is an exhaust pipe,
- 15a:: is an exhaust pipe downstream part,
- 17:: is a tail pipe,
- 18:: is a bracket,
- 20:: is an exhaust gas purification device,
- 21:: is an upstream side catalyst,
- 22:: is a downstream side catalyst,
- 23:: is a secondary air supply pipe,
- 23d:: is a 1 st partial supply pipe,
- 23e:: is a 2nd partial supply pipe,
- 25;: is a secondary air introduction pipe,
- 26:: is a reed valve assembly,
- 30:: is a muffler,
- 32:: is a 1 st hollow barrel part (1 st tubular section),
- 33:: is a 2nd hollow barrel part (2nd tubular section),
- 35:: is an inflow suppression member,
- 36:: is a rear lid member,
- 39:: is an end face member,
- 42:: is a reinforcing member,
- 50:: is a primary expansion chamber,
- 51:: is a secondary expansion chamber,
- 52:: is a tertiary expansion chamber,
- 54:: is a 2nd piping,
- 56:: is a 1 st piping,
- 57:: is a 1 st partition wall,
- 58:: is a 2nd partition wall,
- 60:: is a support member.

Hereunder, there is explained about one embodiment on the basis of the drawings.

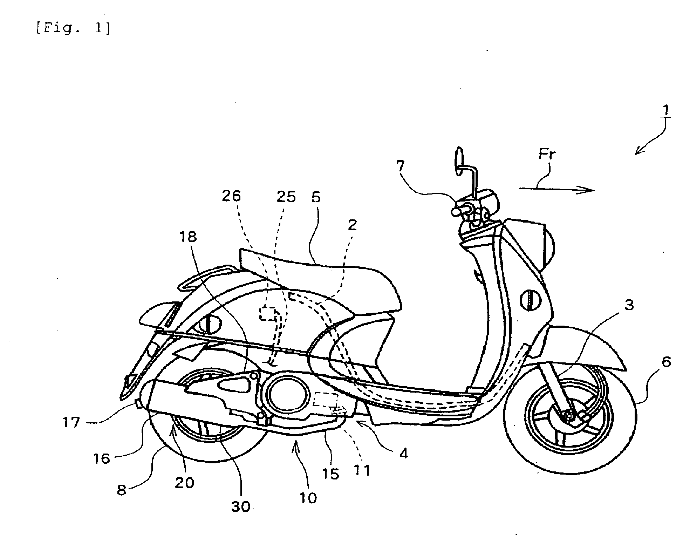

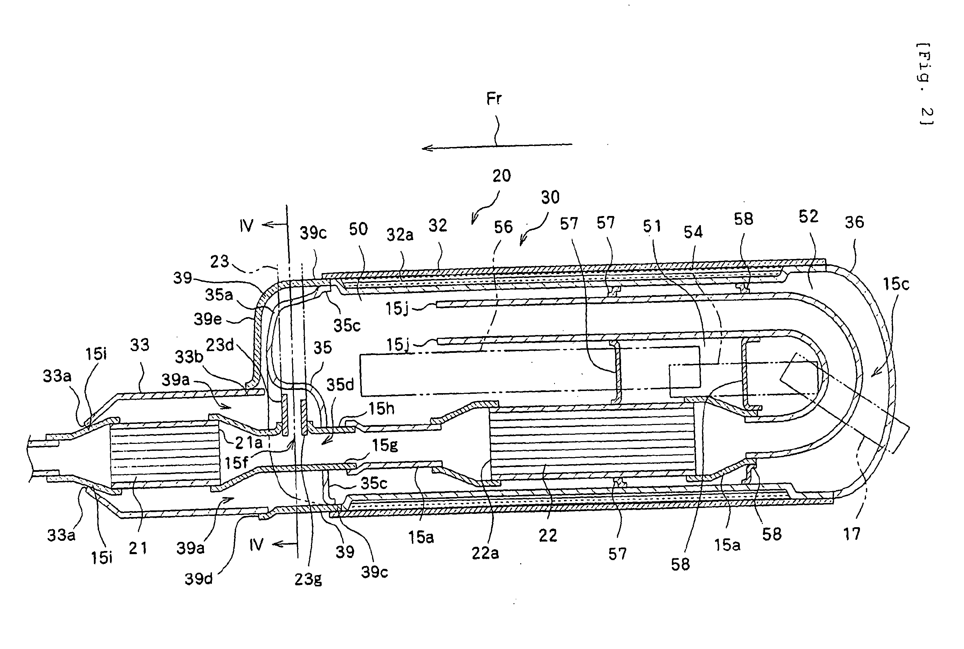

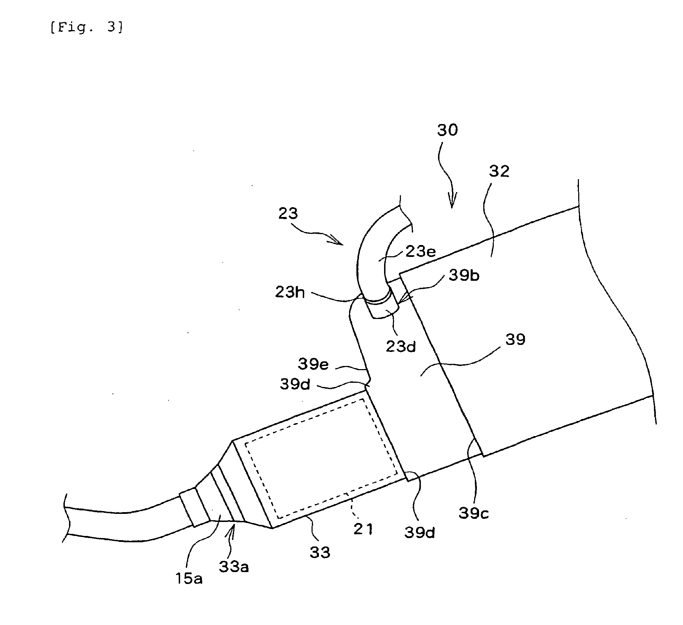

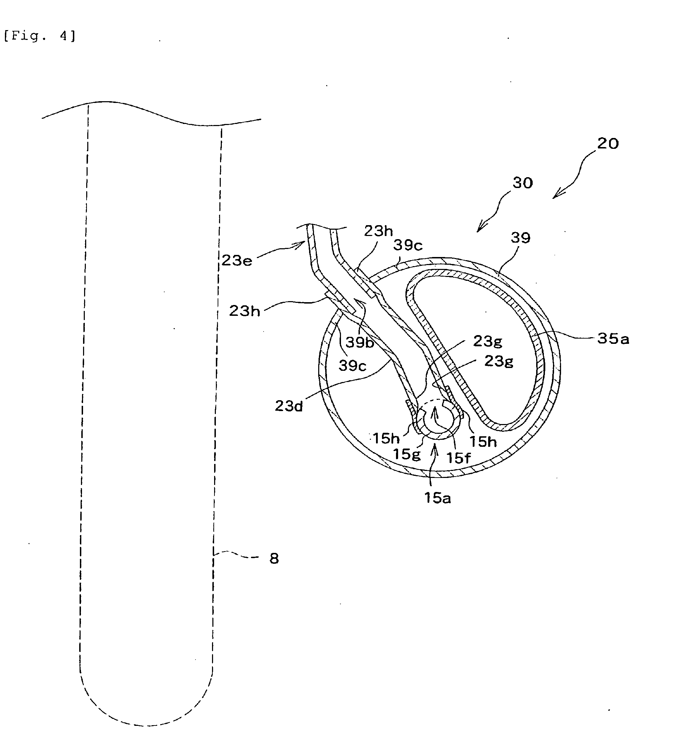

Fig. 1 to Fig. 4 are drawings for explaining an engine having the exhaust gas purification function concerned with one embodiment. Fig. 1 is an external appearance side view of a motorcycle that is one embodiment of a saddle-riding type vehicle, Fig. 2 is a sectional view of a device having a function purifying the exhaust gas (hereafter, called an exhaust gas purification device) among engines concerned with one embodiment, and Fig. 3 is a perspective view showing a front portion with respect to a vehicle traveling direction of the exhaust gas purification device. Fig. 4 is a IV - IV line sectional view of Fig. 2.

In Fig. 1, a front end part of an under-born type car body frame 2 of a motorcycle 1 supports a front fork 3 so as to be rotatable in left and right, and a center part of the car body frame 2 supports a unit swing system engine unit 4 so as to be capable of swinging up and down. Above the engine unit 4, there is attached a seat 5. A front wheel 6 is disposed in a lower end of the front fork 3 and a handle 7 in an upper end, respectively, and a rear wheel 8 is disposed in a rear end part of the engine unit 4. The engine unit 4 is one of a structure in which a 4-cycle water-cooled engine and a transmission case possessing a V-belt system non-stage transmission have been made one body, and an engine 10 is mounted with a cylinder of an internal combustion engine 11 being directed in an approximately horizontal direction.

To an exhaust port of the internal combustion engine 11 of the engine 10, there is connected an exhaust pipe 15 discharging the exhaust gas, which is discharged by a drive of the internal combustion engine 11, to a vehicle traveling direction (direction that Fr shows in the same drawing) rear. The exhaust pipe 15 is approximately, linearly extended in a car body rear after having extended from a portion connected with the internal combustion engine 11 to a right side with respect to the vehicle traveling direction, and a downstream part 15a (exhaust pipe downstream part, refer to Fig. 2) of the exhaust pipe 15 is accommodated in a muffler 30. To the muffler 30, there is connected a tail pipe 17 which discharges the exhaust gas to the vehicle traveling direction rear.

An exhaust gas purification device 20, which is constituted while including this muffler 30 and the exhaust pipe downstream part 15a and which purifies NOx, CO and HC in the exhaust gas having been discharged from the engine, is disposed in a vehicle traveling direction right side of the rear wheel. A bracket 18 is joined to an upper part of the exhaust gas purification device 20, and the bracket 18 is bolt-screwing-fixed to the engine unit 4. By this, the exhaust gas purification device 20 is made so as to swing up and down together with the engine unit 4. A secondary air supply pipe 23 is introduced to an inside of the muffler 30 constituting the exhaust gas purification device 20, and one end part of the secondary air supply pipe 23 is connected to the exhaust pipe downstream part 15a (refer to Fig. 2 to Fig. 4).

One end side of a secondary air introduction pipe 25 is connected to the other end part, of the secondary air supply pipe 23, protruding to an outside of the muffler 30, and the other end side of the secondary air introduction pipe 25 is connected to a reed valve assembly 26. This reed valve assembly 26 exists inside a rear part cover and is disposed below a rear part of the seat 5 and above the rear wheel 8, and has a function allowing only a flow of the secondary air to a catalyst side and preventing a flow in a reverse direction.

On the basis of Fig. 2 to Fig. 4, there is detailedly explained about the exhaust gas purification device 20 concerned with a 1 st embodiment.

As shown in Fig. 2, the muffler 30 constituting the exhaust gas purification device 20 is constituted while including a tubular 1st hollow barrel part 32 of an approximately elliptic shape in cross-section, a rear lid member 36 joined to an opening part in the vehicle traveling direction rear of the 1 st hollow barrel part 32, and a tubular 2nd hollow barrel part 33. The hollow barrel part 32 and the rear lid member 36 respectively make a dual structure. A glass wool 32a is charged between an outside member and an inside member of the hollow barrel part 32, thereby increasing a heat insulating property of the muffler 30. An end face of the 1 st hollow barrel part in a vehicle traveling direction front is constituted by an approximately bowl-like end face member 39 (refer to Fig. 3). The end face member 39 has a bottom part 39e, and an opening 39a introducing the exhaust pipe downstream part 15a is formed in a lower side position in the bottom part 39e. The 2nd hollow barrel part 33 has a diameter smaller than an outer diameter of the 1 st hollow barrel part 32, and is disposed in the vehicle traveling direction front than the 1 st hollow barrel part 32. Further, the 2nd hollow barrel part 33 is joined in an edge part 33b in its one end side to an edge part 39d of the opening 39a of the end face member 39.

By a 1 st partition wall 57 and a 2nd partition wall 58, the inside of the muffler 30 is partitioned, in order from the vehicle traveling direction front, into a primary expansion chamber 50, a secondary expansion chamber 51 and a tertiary expansion chamber 52. In the primary expansion chamber 50 and the secondary expansion chamber 51, there is provided a 1 st piping 56 which penetrates through the 1 st partition wall 57 and makes a flow of the exhaust gas from the primary expansion chamber 50 to the secondary expansion chamber 51 possible. Further, in the secondary expansion chamber 51 and the tertiary expansion chamber 52, there is provided a 2nd piping 54 which penetrates through the 2nd partition wall 58 and makes the flow of the exhaust gas from the secondary expansion chamber 51 to the tertiary expansion chamber 52 possible.

The exhaust pipe downstream part 15a is introduced into the muffler 30 from an exhaust pipe introduction port 33a in the other end side of the 2nd hollow barrel part 33, extended in a longitudinal direction of the muffler 30 toward a rear from the vehicle traveling direction front, and thereafter curved like a U letter in a vehicle traveling direction rearmost part 15c, thereby being adapted such that an end part 15j discharging the exhaust gas is located in the primary expansion chamber 50 located in a most front in the vehicle traveling direction. By this, it is possible to shorten a length of the muffler 30 in the longitudinal direction while maintaining a length of the exhaust pipe downstream part 15a accommodated within the muffler 30.

Inside the exhaust pipe downstream part 15a, there is disposed an upstream side catalyst 21 performing mainly the reduction action and, in its downstream side, there is disposed a downstream side catalyst 22 performing mainly the oxidation action. Between the upstream side catalyst 21 and the downstream side catalyst 22, there is connected the secondary air supply pipe 23 supplying the secondary air into the exhaust pipe downstream part 15a. A portion, where the catalyst is disposed in the exhaust pipe downstream part 15a, is formed in a larger diameter than a portion, of the exhaust pipe downstream part 15a, where no catalyst is disposed, and is formed such that substantial sectional areas of the portion where the catalyst is disposed and other portion become equal. By this, there is adapted such that the exhaust gas smoothly flow through an inside of the catalyst.

The upstream side catalyst 21 and the downstream side catalyst 22 in the exhaust pipe downstream part 15a are disposed between a rear end 21 a of the upstream side catalyst 21 and a front end 22a of the downstream side catalyst 22 in the exhaust pipe downstream part 15a with a predetermined spacing being provided. And, there is adapted such that, when a negative pressure has occurred by an exhaust pulsation of the engine 10, the secondary air flows into the exhaust pipe downstream part 15a from the secondary air supply pipe 23. Thereupon, as mentioned above, in the present embodiment, there is adapted so as to constitute the muffler 30 while including the 1st hollow barrel part 32 and the 2nd hollow barrel part 33 disposed in front of the former 14 barrel part and joined to a lower part of the bottom part 39e of the end face member 39. And, the upstream side catalyst 21 is disposed such that its whole is located in a diameter direction inside of this 2nd hollow barrel part. By doing like this, the upstream side catalyst 21 and the downstream side catalyst 22 are both disposed within the muffler 30, their catalyst actions are activated by the heat within the muffler 30, and it is possible to make the size of the muffler 30 smaller. That is, as shown in Fig. 3, by making so as to provide a space above the 2nd hollow barrel part, there is adapted such that the muffler 30 does not interfere with other device of the vehicle.

In both ends of a portion involving the upstream side catalyst 21 in the exhaust pipe downstream part 15a, there are formed taper parts, an upstream side taper part 15i between both the taper parts and the other end part 33a of the 2nd hollow barrel part are joined, and the exhaust pipe downstream part 15a is supported in the vehicle traveling direction front. Further, the exhaust pipe downstream part 15a is supported by the 1 st partition wall 57 and the 2nd partition wall 58 in the inside of the muffler 30.

As shown in Fig. 2 to Fig. 4, inside the end face member 39, there is provided an inflow suppression member 35 suppressing an inflow of the exhaust gas into the 2nd hollow barrel part 33. This inflow suppression member 35 is formed approximately like a bowl having a bottom face, and has in the bottom face a semicircular bottom part 35a deeper than the other. An edge part 35c of the inflow suppression member 35 is formed in the same shape as an edge part 39c of the end face member 39, and the inflow suppression member 35 is joined in an outer circumference face of its edge part 35c to an internal circumference face of the edge part 39c of the end face member 39. Further, the inflow suppression member 35 is disposed such that the bottom face of the inflow suppression member 35 having been formed like the bowl is located between a portion, of the secondary air supply pipe 23, accommodated within the muffler 30 and the end part 15j of the exhaust pipe downstream part 15a. For this reason, there is suppressed the inflow of the high temperature exhaust gas, which has been discharged from the exhaust pipe downstream part 15a, into the 2nd hollow barrel part 33, so that it is possible to increase the heat insulating property without making the 2nd hollow barrel part 33 into the dual structure, differing from the 1 st hollow barrel part 32. As a result, an outer diameter of the 2nd hollow barrel part 33 is formed smaller. Further, since the exhaust gas having been discharged from the end part of the exhaust pipe downstream part 15a impinges against this inflow suppression member 35 and does not directly jet-flow to the secondary air supply pipe 23, the elongation due to the thermal expansion of the secondary air supply pipe 23 is suppressed, and there is prevented a decrease in supplied oxygen absolute quantity, which is due to the fact that the secondary air itself flowing trough the inside of the secondary air supply pipe 23 is overheated. Incidentally, an insertion hole 35d is formed in a lower part of the inflow suppression member 35, the exhaust pipe downstream part 15a is introduced from the insertion hole 35d to an inside than the inflow suppression member 35 within the muffler 30, and the downstream side catalyst 22 and the exhaust pipe in a downstream side than the downstream side catalyst 22 are accommodated in a tubular main body constituted by the inflow suppression member 35, the 1 st hollow barrel part 32 and the rear lid member 36.

The secondary air supply pipe 23 is connected to the exhaust pipe downstream part 15a in an outside of the inflow suppression member 35 while passing between the end face member 39 and the inflow suppression member 35. Concretely, an insertion hole 39b is provided in a car body side upper part of the end face member 39, and the secondary air supply pipe 23 is inserted into the muffler 30 from the insertion hole 39b. The secondary air supply pipe 23 is constituted by a 1 st partial supply pipe 23d and a 2nd partial supply pipe 23e. As shown in Fig. 4, the 1 st partial supply pipe 23d is introduced to an inside of the muffler 30 while being made so as to extend along a side face of the bottom part 35a of the inflow suppression member 35. One end part 23g of the 1 st partial supply pipe 23d is connected with the exhaust pipe downstream part 15a disposed in the lower part within the muffler 30. A secondary air inflow port 15f is provided in the exhaust pipe downstream part 15a, and the one end part 23g of the 1 st partial supply pipe 23d and a circumference edge of the secondary air inflow port 15f are weld-joined. Incidentally, in the vicinity of the secondary air inflow port 15f of the exhaust pipe downstream part 15a, the exhaust pipe downstream part 15a is constituted by an upper side semicylindrical member 15h which is approximately semicylindrical and constitutes an upper side of the exhaust pipe downstream part 15a, and a lower side semicylindrical member 15g which is similarly, approximately semicylindrical and constitutes an lower side of the exhaust pipe downstream part 15a (refer to Fig. 2). And, the secondary air inflow port 15f is formed in the upper side semicylindrical member 15h. Other end part 23h of the 1 st partial supply pipe 23d is weld-joined with the 2nd partial supply pipe 23e in the outside of the muffler 30, so that an assembly of the exhaust gas purification device 20 becomes easy.

As having been explained above, according to the present embodiment, by the facts that the muffler 30 is constituted while including the 1 st hollow barrel part 32 and the 2nd hollow barrel part 33 whose outer diameter is smaller than the 1 st hollow barrel part, and that the upstream side catalyst 21 is disposed in a diameter direction inside of the 2nd hollow barrel part 33, there is realized the engine possessing the smaller exhaust gas purification device.

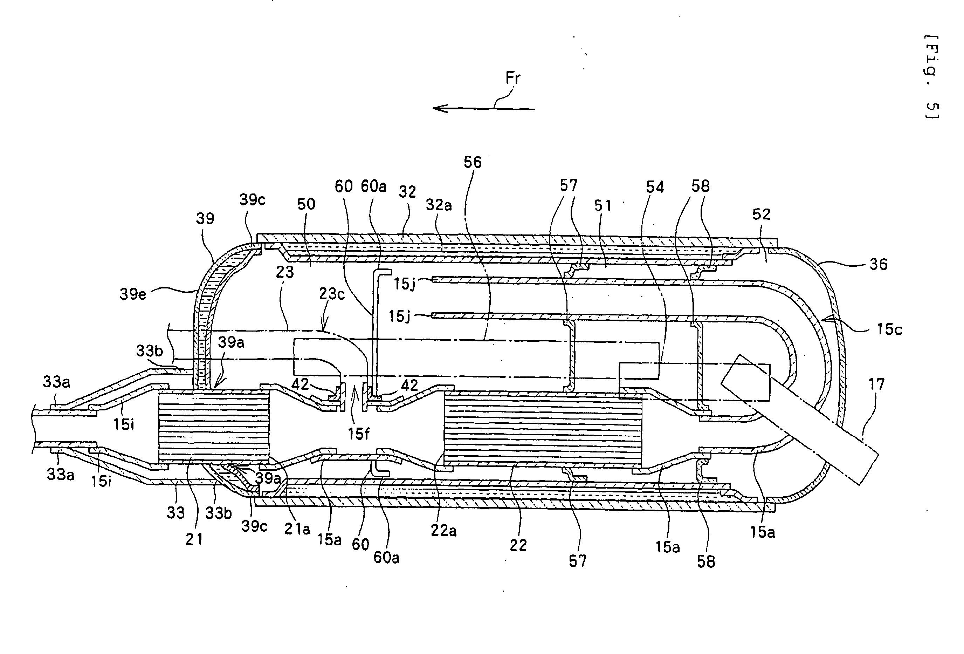

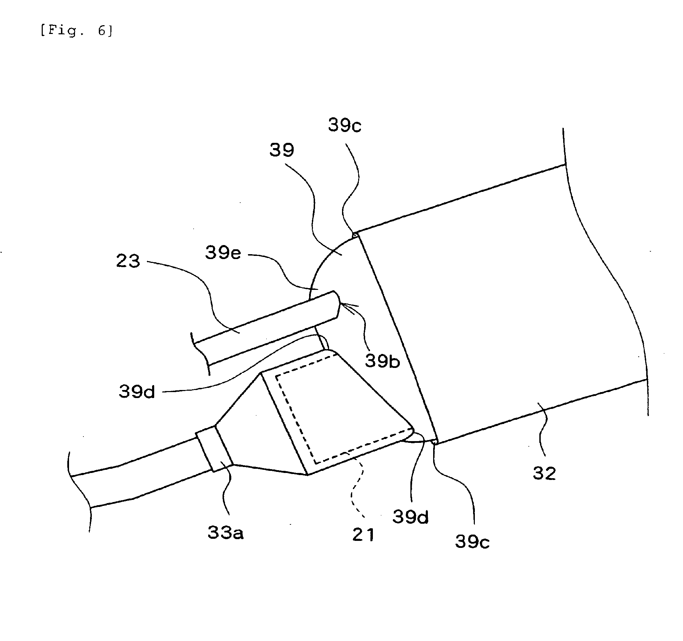

Incidentally, the present invention is not one limited to the above embodiment, and various modifications are possible. For example, there may be adapted such that, by protruding only one part of the upstream side catalyst 21 from the 1 st hollow barrel part 32, that portion having been protruded is accommodated in the 2nd hollow barrel part 33. Fig. 5 and Fig. 6 are drawings showing the exhaust gas purification device 20 possessed in the engine 10, which is concerned with this mode, wherein Fig. 5 is a sectional view of the exhaust gas purification device 20, and Fig. 6 is a perspective view of the exhaust gas purification device 20 in the vehicle traveling direction. Here, about a place similar to the exhaust gas purification device 20 concerned with the above embodiment, the same reference numeral is applied.

As shown in Fig. 5 and Fig. 6, in the present embodiment, there is adapted such that the opening 39a introducing the exhaust pipe downstream part 15a is provided in the lower part of the bottom part 39e of the end face member 39. And, there is adapted such that a vehicle traveling direction front side of the upstream side catalyst 21 is accommodated in the inside of the 2nd hollow barrel part 33, and a rear side is accommodated in the 1 st hollow barrel part 32. Further, in the present embodiment, there is adapted such that a vicinity of the opening 39a in the bottom part 39e of the end face member 39 and the one end part 33b of the 2nd hollow barrel part 33 are weld-joined, and an edge part of the opening 39a and a side part of the exhaust pipe downstream part 15a are weld-joined, thereby causing the end face member 39 to function as the inflow suppression member. The end face member 39 makes a dual structure, and there is made so as to improve the heat insulating property of the muffler 30 by making such that a heat insulating material is charged between its inner wall and outer wall.

Incidentally, in the present embodiment, it is adapted such that, by forming the insertion hole 39b in the bottom part 39e of the end face member 39, the secondary air supply pipe 23 is introduced into the muffler 30 from the insertion hole 39b. And, the secondary air supply pipe 23 extends in the same direction as the exhaust pipe downstream part 15a while being spaced therefrom, and is curved to an exhaust pipe downstream part 15a side in a curved part 23c. An annular reinforcing member 42 is fitted to an end part of the secondary air supply pipe 23, and the reinforcing member 42, a side part of the secondary air supply pipe 23 and a vicinity of the secondary air inflow port 15f of the exhaust pipe downstream part 15a are weld-joined. By the fact that the secondary air supply pipe 23 extends in the same direction as the exhaust pipe downstream part 15a, thermal expansion directions of the secondary air supply pipe 23 and the exhaust pipe downstream part 15a become the same, so that a connection strength of both the pipings increases. Further, in the present embodiment, the exhaust pipe downstream part 15a is supported by the other end part 33a of the 2nd hollow barrel part 33 and not only the 1 st partition wall 57 and the 2nd partition wall 58 but also a plate-like support member 60. This support member 60 is bent in its edge part, an outer circumference face 60a of the edge part concerned is joined in one part of an inner circumference face of the muffler 30.

As having been explained above, also in the present embodiment, by the facts that the muffler 30 is constituted while including the 1st hollow barrel part 32 and the 2nd hollow barrel part 33 whose outer diameter is smaller than the 1 st hollow barrel part, and that one part of the upstream side catalyst 21 is disposed in the diameter direction inside of the 2nd hollow barrel part 33, there is realized the engine 10 possessing the smaller exhaust gas purification device 20.

As has been described above, the description discloses, in order to solve the above problems, as a preferred embodiment an engine characterized by including an exhaust pipe connected to an exhaust port of an internal combustion engine, an upstream side catalyst disposed in the exhaust pipe, a downstream side catalyst disposed in a downstream side of the upstream side catalyst in the exhaust pipe, a secondary air supply pipe connected between the upstream side catalyst and the downstream side catalyst in the exhaust pipe, and a muffler which possesses a 1 st hollow barrel part having in its end face an opening for introducing the exhaust pipe and a 2nd hollow barrel part joined to the opening and having an outer diameter smaller than the 1 st hollow barrel part, and in which one part of the upstream side catalyst at least in an upstream side is disposed in the 2nd hollow barrel part and the exhaust pipe in a downstream side than the upstream side catalyst is accommodated. In this embodiment, the muffler possesses the 1 st hollow barrel part and the 2nd hollow barrel part whose outer diameter is smaller than the former, and one part of the upstream side catalyst at least in the upstream side is disposed in the 2nd hollow barrel part. For this reason, it is possible to provide a space around the 2nd hollow barrel part, so that there is realized an engine in which the muffler has been made small.

Further, in one mode of this embodiment, the engine is a unit swing type engine having been supported swingably with respect to a car body. In the unit swing type engine, although a driving force transmission mechanism, such as internal combustion engine of engine or transmission, and the muffler are generally provided while being adjoined, according to this mode, since the space is provided around the 2nd hollow barrel part, it is possible to avoid an interference between the muffler and the internal combustion engine as well as the driving force transmission mechanism, which are disposed around the muffler.

Further, in one mode of this embodiment, in the exhaust pipe, a portion accommodated in the muffler is curved after having been extended in a longitudinal direction of the muffler. According to this mode, it is possible to adapt such that the engine can output a high torque even in a low velocity region while maintaining a length of the exhaust pipe, and the muffler can be made small.

Further, in one mode of this embodiment, the internal combustion engine is disposed such that an axis of a cylinder of the internal combustion engine becomes approximately horizontal. According to this mode, since the space can be provided above the internal combustion engine and the exhaust pipe is curved within the muffler while ensuring an accommodation case and the like in, e.g., that space, it is possible to maintain the length of the exhaust pipe.

Further, in one mode of this embodiment, the muffler possesses an inflow suppression member suppressing an inflow of an exhaust gas into the 2nd hollow barrel part. In this mode, by the fact that the inflow suppression member suppresses the inflow of the exhaust gas into the 2nd hollow barrel part, it becomes unnecessary to provide a heat insulating member or a silencing member, such as glass wool, in an outer wall of the 2nd hollow barrel part, so that it is possible to make the outer diameter of the 2nd hollow barrel part smaller.

Further, in one mode of this embodiment, the inflow suppression member is provided between an end part, in the exhaust pipe, accommodated in the muffler and discharging the exhaust gas and a portion, in the secondary air supply pipe, accommodated in the muffler. In this mode, since the exhaust gas discharged from the end part of the exhaust pipe impinges against the inflow suppression member and does not directly jet-flow to a secondary air supply pipe side, the secondary air supply pipe is not heated excessively, so that an elongation of the secondary air supply pipe due to a thermal expansion is suppressed.

Further, in one mode of this embodiment, an edge part of the inflow suppression member is joined to an inner circumference face of the 1 st hollow barrel part. According to this mode, a quantity of the exhaust gas flowing into the 2nd hollow barrel part can be additionally decreased, so that it is possible to make the outer diameter of the 2nd hollow barrel part small.

Further, the description above describes a saddle-riding type vehicle having possessed any of the above embodiments of the engines. The saddle-riding type vehicle is, e.g., the motorcycle (including a scooter), a 4-wheel buggy, a snowmobile, or the like. In the present embodiments, the muffler possesses the 1st hollow barrel part and the 2nd hollow barrel part whose outer diameter is smaller than the former, and at least one part of the upstream side catalyst is provided in a diameter direction inside of the 2nd hollow barrel part. For this reason, a size of the muffler can be made small, so that it is possible to realize the saddle-riding type vehicle in which there has been suppressed an interference of the saddle-riding type vehicle with other device.

The description above discloses, as a particularly preferred embodiment, an exhaust gas purification device in which both of an upstream side catalyst and a downstream side catalyst, which have been provided in an exhaust pipe, is disposed in a muffler, and in which the muffler has been made small. Thus, there may be beneficially provided an exhaust gas purification device 20 which is connected to an engine and constituted while including an exhaust pipe downstream part 15a in whose inside there are disposed an upstream side catalyst 21 and a downstream side catalyst 22 disposed in a downstream side than the former, and a muffler 30 accommodating the exhaust pipe downstream part 15a, and which is characterized in that the muffler 30 is constituted by a 1 st hollow barrel part 32 and a 2nd hollow barrel part whose outer diameter is smaller than the former, and the upstream side catalyst 21 is disposed in an inside of the 2nd hollow barrel part.

## Claims

1. Exhaust gas purification device for an internal combustion engine, in particular for a motorcycle, comprising an exhaust pipe (15) connectable to an exhaust port of the internal combustion engine, an upstream side catalyst (21) disposed in the exhaust pipe (15), a downstream side catalyst (22) disposed in the exhaust pipe (15) at a downstream side of the upstream side catalyst (21), and a muffler (30) being comprised of first and second tubular sections (32, 33), wherein the upstream side catalyst (21) is at least partially disposed in an inside of the second tubular section (33), wherein an outer dimension of the second tubular section (33) is smaller than an outer dimension of the first tubular section (32), and wherein the exhaust pipe (15) is disposed in the muffler (30) at a downstream side of the upstream side catalyst (21).

2. Exhaust gas purification device according to claim 1, wherein the first tubular section is a first hollow barrel part (32) of the muffler (30), the second tubular section is a second hollow part (33) of the muffler (30) and at least an upstream side of the upstream side catalyst (21) is disposed in the second hollow barrel part (33) of the muffler (30).

3. Exhaust gas purification device according to claim 2, wherein the first hollow barrel part (32) has in its end face an opening for introducing the exhaust pipe (15) and the second hollow barrel part (33) is joined to the opening and has an outer diameter smaller than the first hollow barrel part (32).

4. Exhaust gas purification device according to one of the claims 1 to 3, wherein a secondary air supply pipe (15a) is connected between the upstream side catalyst (21) and the downstream side catalyst (22) in the exhaust pipe (15).

5. Exhaust gas purification device according to one of the claims 1 to 4, wherein in the exhaust pipe (15) a portion accommodated in the muffler (30) is curved after having been extended in a longitudinal direction of the muffler (30).

6. Exhaust gas purification device according to one of the claims 1 to 5, wherein muffler (30) possesses an inflow suppression member (35) suppressing an inflow of an exhaust gas into the second tubular section (33).

7. Exhaust gas purification device according to claim 6, wherein the inflow suppression member (35) is provided between an end part, in the exhaust pipe (15), accommodated in the muffler (30) and discharging the exhaust gas and a portion, in the secondary air supply pipe (15a), accommodated in the muffler (30).

8. Exhaust gas purification device according to claim 6 or 7, wherein an edge part of the inflow suppression member (35) is joined to an inner circumference face of the first tubular section (32).

9. Engine having an exhaust gas purification device according to one of the claims 1 to 8, wherein the engine is a unit swing type engine being supported swingably with respect to a car body.

10. Engine according to claim 9, wherein the internal combustion engine is disposed such that an axis of a cylinder of the internal combustion engine becomes approximately horizontal.

11. Saddle-riding type vehicle having an engine according to claim 9 or 10.

## Patentansprüche

1. Abgasreinigungsvorrichtung für eine Brennkraftmaschine, insbesondere für ein Motorrad, aufweisend ein Abgasrohr (15), verbindbar mit einer Auslassöffnung der Brennkraftmaschine, einen stromaufseitigen Katalysator (21), angeordnet in dem Abgasrohr (15), einen stromabseitigen Katalysator (22), angeordnet in dem Abgasrohr (15) auf einer stromabwärtigen Seite des stromaufseitigen Katalysators (21), und einen Schalldämpfer (30), der aus ersten und zweiten rohrförmigen Abschnitten (32, 33) besteht, wobei der stromaufseitige Katalysator (21) zumindest teilweise in einem Inneren des zweiten rohrförmigen Abschnittes (33) angeordnet ist, wobei eine Außenabmessung des zweiten rohrförmigen Abschnittes (33) kleiner als eine Außenabmessung des ersten rohrförmigen Abschnittes (32) ist und wobei das Abgasrohr (15) in dem Schalldämpfer (30) auf einer stromabseitigen Seite des stromaufseitigen Katalysators (21) angeordnet ist.

2. Abgasreinigungsvorrichtung nach Anspruch 1, wobei der erste rohrförmige Abschnitt ein erstes hohles tonnenförmiges Teil (32) des Schalldämpfers (30) ist, der zweite rohrförmige Abschnitt ein zweiter hohles Teil (33) des Schalldämpfers (30) ist und zumindest eine stromaufwärtige Seite des stromaufseitigen Katalysators (21) in dem zweiten hohlen tonnenförmigen Teil (33) des Schalldämpfers (30) angeordnet ist.

3. Abgasreinigungsvorrichtung nach Anspruch 2, wobei das erste hohle tonnenförmige Teil (32) in seiner Endfläche eine Öffnung zum Einführen des Abgasrohres (15) hat und das zweite hohle tonnenförmige Teil (33) mit der Öffnung verbunden ist und einen Außendurchmesser kleiner als das erste hohle tonnenförmige Teil (32) hat.

4. Abgasreinigungsvorrichtung nach einem der Ansprüche 1 bis 3, wobei ein sekundäres Luftzuführungsrohr (15a) zwischen dem stromaufseitigen Katalysator (21) und dem stromabseitigen Katalysator (22) in dem Abgasrohr (15) verbunden ist.

5. Abgasreinigungsvorrichtung nach einem der Ansprüche 1 bis 4, wobei in dem Abgasrohr (15) ein Abschnitt, der in dem Schalldämpfer (30) untergebracht ist, gekrümmt ist, nachdem er in einer Längsrichtung des Schalldämpfers (30) verlängert worden ist.

6. Abgasreinigungsvorrichtung nach einem der Ansprüche 1 bis 5, wobei der Schalldämpfer (30) ein Einströmunterdrückungsteil (35) hat, das ein Einströmen eines Abgases in den zweiten rohrförmigen Abschnitt (33) unterdrückt.

7. Abgasreinigungsvorrichtung nach Anspruch 6, wobei das Einströmunterdrückungsteil (35) zwischen einem Endteil in dem Abgasrohr (15), untergebracht in dem Schalldämpfer (30) und das Abgas abgibt, und einem Abschnitt in dem sekundären Luftzuführungsrohr (15a), untergebracht in dem Schalldämpfer (30), angeordnet ist.

8. Abgasreinigungsvorrichtung nach Anspruch 6 oder 7, wobei ein Kantenteil des Einströmunterdrückungsteils (35) mit einer inneren Umfangsfläche des ersten rohrförmigen Abschnittes (32) verbunden ist.

9. Motor mit einer Abgasreinigungsvorrichtung nach einem der Ansprüche 1 bis 8, wobei der Motor ein Motor vom Schwing- Typ ist, der in Bezug auf eine Fahrzeugkarosserie schwingbar gelagert ist.

10. Motor nach Anspruch 9, wobei die Brennkraftmaschine derart angeordnet ist, dass eine Achse eines Zylinders der Brennkraftmaschine annähernd horizontal wird.

11. Fahrzeug vom Aufsitz- Typ mit einem Motor nach Anspruch 9 oder 10.

## Revendications

1. Dispositif d'épuration de gaz d'échappement pour un moteur à combustion interne, en particulier pour une motocyclette, comportant un tuyau d'échappement (15) pouvant être relié à un orifice d'échappement du moteur à combustion interne, un catalyseur côté amont (21) disposé dans le tuyau d'échappement (15), un catalyseur côté aval (22) disposé dans le tuyau d'échappement (15) sur un côté aval du catalyseur côté amont (21), et un silencieux (30) constitué d'un premier et d'un second tronçons tubulaires (32, 33), dans lequel le catalyseur côté amont (21) est au moins partiellement disposé dans un intérieur du second tronçon tubulaire (33), dans lequel une dimension extérieure du second tronçon tubulaire (33) est plus petite qu'une dimension extérieure du premier tronçon tubulaire (32), et dans lequel le tuyau d'échappement (15) est disposé dans le silencieux (30) à un côté aval du catalyseur côté amont (21).

2. Dispositif d'épuration de gaz d'échappement selon la revendication 1, dans lequel le premier tronçon tubulaire est une première partie cylindrique creuse (32) du silencieux (30), le second tronçon tubulaire est une seconde partie creuse (33) du silencieux (30) et au moins un côté amont du catalyseur côté amont (21) est disposé dans la seconde partie cylindrique creuse (33) du silencieux (30).

3. Dispositif d'épuration de gaz d'échappement selon la revendication 2, dans lequel la première partie cylindrique creuse (32) a dans sa face d'extrémité une ouverture pour introduire le tuyau d'échappement (15) et la seconde partie cylindrique creuse (33) est réunie à l'ouverture et a un diamètre extérieur plus petit que la première partie cylindrique creuse (32).

4. Dispositif d'épuration de gaz d'échappement selon l'une des revendications 1 à 3, dans lequel un tuyau d'alimentation en air secondaire (15a) est raccordé entre le catalyseur côté amont (21) et le catalyseur côté aval (22) dans le tuyau d'échappement (15).

5. Dispositif d'épuration de gaz d'échappement selon l'une des revendications 1 à 4, dans lequel, dans le tuyau d'échappement (15), une partie reçue dans le silencieux (30) est incurvée après s'être étendue dans une direction longitudinale du silencieux (30).

6. Dispositif d'épuration de gaz d'échappement selon l'une des revendications 1 à 5, dans lequel le silencieux (30) possède un élément de suppression d'écoulement entrant (35) supprimant un écoulement entrant de gaz d'échappement dans le second tronçon tubulaire (33).

7. Dispositif d'épuration de gaz d'échappement selon la revendication 6, dans lequel l'élément de suppression d'écoulement entrant (35) est agencé entre une partie d'extrémité dans le tuyau d'échappement (15) reçue dans le silencieux (30) et évacuant les gaz d'échappement et une partie dans le tuyau d'alimentation en air secondaire (15a) reçue dans le silencieux (30).

8. Dispositif d'épuration de gaz d'échappement selon la revendication 6 ou 7, dans lequel une partie de bord de l'élément de suppression d'écoulement entrant (35) est réunie avec une face circonférentielle intérieure du premier tronçon tubulaire (32).

9. Moteur ayant un dispositif d'épuration de gaz d'échappement selon l'une des revendications 1 à 8, dans lequel le moteur est un moteur de type oscillant unitaire supporté de manière oscillante par rapport à une carrosserie automobile.

10. Moteur selon la revendication 9, dans lequel le moteur à combustion interne est disposé de telle sorte qu'un axe d'un cylindre du moteur à combustion interne devient approximativement horizontal.

11. Véhicule de type à conduite sur selle ayant un moteur selon la revendication 9 ou 10.
